**Europäisches Patentamt**

**European Patent Office**

**Office européen des brevets**

(19)

(11) Veröffentlichungsnummer: **0 037 859**
**A1**

(12) # EUROPÄISCHE PATENTANMELDUNG

(21) Anmeldenummer: **80200339.2**

(22) Anmeldetag: **16.04.80**

(51) Int. Cl.³: **H 01 B 1/08,** H 01 C 7/02,
C 04 B 35/00

(43) Veröffentlichungstag der Anmeldung: **21.10.81**
**Patentblatt 81/42**

(84) Benannte Vertragsstaaten: **AT BE CH DE FR GB IT LI LU NL SE**

(71) Anmelder: **BBC Brown, Boveri & Cie.
(Aktiengesellschaft), CH-5401 Baden (CH)**

(72) Erfinder: **Perkins, Rogers S., Dr., Steinstrasse 20a,
CH-5406 Baden-Rütihof (CH)**
Erfinder: **Rüegg, Andreas, Dr., Unterriederstrasse 33,
CH-5412 Gebenstorf (CH)**

(54) **Gesintertes Kaltleitermaterial und Verfahren zu seiner Herstellung.**

(57) Gesintertes Kaltleitermaterial auf der Basis von mit Chrom, Aluminium oder Scandium dotiertem $V_2O_3$ mit weiteren, vorwiegend in elementarer Form vorliegenden Zusätzen von Eisen, Kupfer, Nickel, Kobalt, wodurch Widerstandskörper hoher Dichte, mechanischer Festigkeit, Thermoschockunempfindlichkeit und Stromtragfähigkeit sowie guter Reproduzierbarkeit erhalten werden. Herstellung der Sinterkörper durch Mischen und Mahlen der Komponenten, Reduktion im Wasserstoffstrom, Pressen zu Tabletten und Sintern im Wasserstoffstrom.

EP 0 037 859 A1

36/80
Br/dh

- 1 -

## Gesintertes Kaltleitermaterial und Verfahren zu seiner Herstellung

Die Erfindung geht aus von gesintertem Kaltleitermaterial nach der Gattung des Anspruchs 1 und von einem Verfahren zu seiner Herstellung nach der Gattung des Anspruchs 8.

Kaltleiter auf der Basis von mit Chrom, Aluminium oder Scandium dotiertem Vanadiumsesquioxyd sind dank ihrer Phasenübergänge seit längerer Zeit Gegenstand wissenschaftlicher Untersuchungen. Es ist bekannt, dass für reines oder schwach dotiertes $V_2O_3$ zu diesem Zweck vorwiegend Einkristalle verwendet werden (z.B. J.C.Launay und M. Pouchard, Sur quelques aspects des transport en phase vapeur du sesquioxyde de vanadium $V_2O_3$ pur et dopé au chrome, J. of Crystal Growth 36, S. 297-310, 1976; D.B. Mc Whan und J.P. Remeika, Metal-insulator Transition in $(V_{1-x} Cr_x)_2O_3$ , Phys. Review B, Vol. 2, Nr. 9, S. 3734-3750, Nov. 1970). Für höhere Dotierungen und grössere Abmessungen der Versuchskörper müssen keramische Proben verwendet werden (siehe D.B. Mc Whan et al, Metal-insulator Transitions in pure and doped $V_2O_3$, Phys. Review B, Vol. 7, Nr. 5, S. 1920-1931, March 1973).

Die für diese wissenschaftlichen Untersuchungen gewählten

- 2 -

Formen sind als Ausgangswerkstoffe für die Herstellung von Kaltleiter-Widerstandskörpern für technische Anwendungen nicht geeignet. Es hat sich erwiesen, dass z.B. Einkristalle den thermischen Beanspruchungen in der Praxis nicht gewachsen sind und unter der beim Phasenübergang zu erleidenden anisotropen Gitterkonstantenänderung Risse bekommen bzw. vollständig zerstört werden. Die gleiche Erscheinung tritt auf bei üblichen Keramikkörpern, sobald die geforderten elektrischen Leistungen während der Erwärmungsphase eine gewisse Grenze überschreiten. Den im praktischen Betrieb vorkommenden hohen Aufheizgeschwindigkeiten sind diese laboratoriumsmässigen Kaltleiterkörper nicht gewachsen.

Der Erfindung liegt die Aufgabe zugrunde, gesintertes Kaltleitermaterial auf der Basis von dotiertem $V_2O_3$ sowie ein Herstellungsverfahren anzugeben, womit sich homogene, dichte Körper mit gut definierten reproduzierbaren Eigenschaften erzielen lassen, welche eine hohe Thermoschockunempfindlichkeit und Stromtragfähigkeit auch nach wiederholtem Ansprechen im Betrieb gewährleisten. Insbesondere soll die Sinterfähigkeit von Körpern grösserer Abmessungen verbessert werden.

Diese Aufgabe wird erfindungsgemäss durch die Merkmale der Ansprüche 1 und 8 gelöst.

Der Kern der Erfindung besteht im wesentlichen in der Beimischung weiterer Zusätze, wodurch die Sinterfähigkeit und Homogenität verbessert, die Sintertemperatur gesenkt und die zwischen den Körnern vorhandene amorphe intergranulare Phase der Kontrolle ihrer Eigenschaften besser zugänglich gemacht wird.

- 3 -

Die Erfindung wird anhand der nachfolgenden, zum Teil durch
Figuren erläuterten Ausführungsbeispiele beschrieben.

Dabei zeigt:

Fig. 1   ein Diagramm der Abhängigkeit der relativen Dichte
         vom Eisengehalt,

Fig. 2   ein Diagramm der Abhängigkeit der Vickershärte vom
         Eisengehalt,

Fig. 3   ein Diagramm der Abhängigkeit der mittleren Korngrösse vom Eisengehalt,

Fig. 4   ein Diagramm der Abhängigkeit des Widerstandshubes
         vom Eisengehalt.

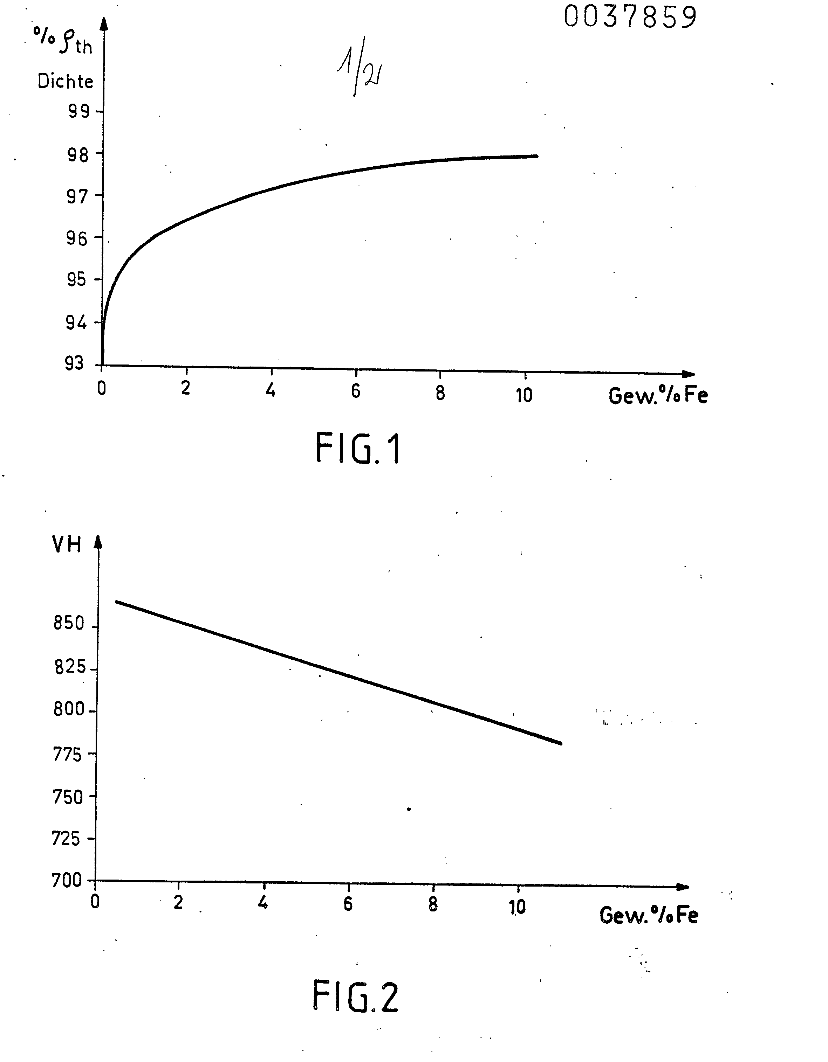

In Fig. 1 ist der Zusammenhang zwischen der relativen Dichte
in Prozent der theoretischen (% $\rho_{th}$) für ein Material der
Grundzusammensetzung nach der Formel:

$$(V_{0,996} Cr_{0,004})_2 O_3$$

ohne und mit Eisenzusatz (Gew.-% Fe) graphisch wiedergegeben.
Die Sintertemperatur betrug dabei 1370°C. Die zum Vergleich
herangezogene eisenfreie Probe erreichte lediglich eine
relative Dichte von 80 % der theoretischen. Der vorteilhafte Einfluss selbst geringfügiger Eisenzusätze kommt hier
deutlich zum Ausdruck.

Fig. 2 zeigt die Vickershärte in Abhängigkeit des Eisenzusatzes für das obige Material. Auch bei hohen Eisenzugaben

- 4 -

ist nur eine geringe Abnahme der Härte zu verzeichnen. Vergleichsweise wies die eisenfreie Probe eine niedrigere Vickershärte von ca. 715 Einheiten auf.

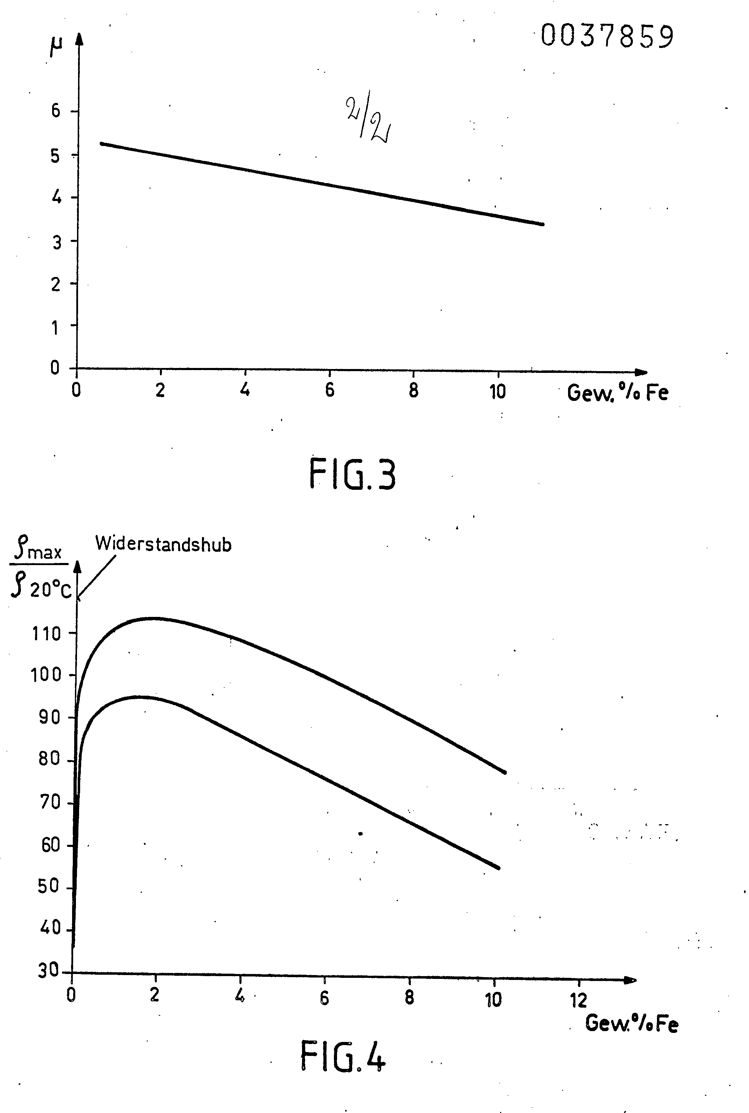

In Fig. 3 kommt der kornverfeinernde Einfluss des Eisenzusatzes auf das obige Material, welcher die Eigenschaften des Werkstoffes günstig beeinflusst, gut zum Ausdruck. Die mittlere Korngrösse ist auf der Ordinate in $\mu$ angegeben.

Fig. 4 zeigt den maximalen Widerstandshub $\frac{\rho \, max}{\rho \, 20^{o}C}$ (das Verhältnis des maximalen spez. Widerstandes oberhalb der Uebergangstemperatur zu demjenigen bei Raumtemperatur) für das obige Material in Abhängigkeit des Eisenzusatzes. Die Kurve "a" bezieht sich auf einen Werkstoff mit einer Phasenübergangstemperatur $\vartheta_c$ = 100$^{o}$C, die Kurve "b" auf einen solchen mit $\vartheta_c$ = 110$^{o}$C. Der optimale Widerstandshub wird in beiden Fällen bei einem Eisengehalt von ca. 2 Gew.-% erreicht und beträgt 114 bzw. 95. Demgegenüber zeigte die eisenfreie Vergleichsprobe lediglich einen Widerstandshub von 37. Bereits ein Eisengehalt von 0,1 Gew.-% bringt erhebliche Vorteile gegenüber eisenfreiem Material.

Ausführungsbeispiel I:

Es wurde ein Werkstoff hergestellt, welcher als Endprodukt folgender Formel entspricht.

$$(V_{0,997} \, Cr_{0,003})_2 O_3 + 2,5 \text{ Gew.-\% Fe.}$$

Zu diesem Zweck wurden die nachfolgenden Komponenten gemischt, indem sie zusammen mit 120 ml absolutem Alkohol im Achatbecher auf einer Planetenmühle während 5 h gemahlen

- .5 -

wurden:

$$V_2O_3 \quad : \quad 50 \text{ g}$$

$$Cr_2O_3 \quad : \quad 0,126 \text{ g}$$

$$Fe_2O_3 \quad : \quad 1,515 \text{ g}$$

Die so erhaltene Suspension wurde zentrifugiert und der Rückstand während 16 h im Vakuum-Trockenschrank getrocknet. Dann wurde das Pulvergemisch im trockenen Wasserstoffstrom bei einer Durchflussmenge von 1 l/min $H_2$ unter ständiger Bewegung zunächst während 3 h bei 600°C und hierauf während 5 h bei 990°C geglüht. Dabei wurde das $V_2O_5$ zu $V_2O_3$ und das $Fe_2O_3$ zu Fe reduziert. Das reduzierte Pulver wurde nun unter einen Druck von 620 bar zu Tabletten von 20 mm Durchmesser und 12 mm Höhe gepresst, welche anschliessend unter Wasserstoffatmosphäre mit einem Taupunkt von 0°C bei einer Durchflussmenge von 0,5 l/min $H_2$ während 10 h bei einer Temperatur von 1370°C gesintert wurden. Dieses Verfahren wurde an total 20 Tabletten angewendet, um die Reproduzierbarkeit der Versuchsergebnisse zu gewährleisten. Sämtliche Tabletten erzielten dabei Dichtewerte, welche durchwegs über 97 % der theoretischen Dichte lagen. Die elektrischen Eigenschaften wurden mit denjenigen von 20 Tabletten aus $(V_{0,997}Cr_{0,003})_2O_3$ ohne Eisenzusatz verglichen. Die Resultate sind in Tabelle 1 zusammengestellt. Daraus geht hervor, dass die Reproduzierbarkeit durch den Eisenzusatz erheblich verbessert wird und dass auch die elektrischen Eigenschaften günstiger ausfallen.

- 6 -

Ausführungsbeispiel II:

Siehe Fig. 1 bis 4 Das Endprodukt entsprach der nachfolgenden Formel:

$$(V_{0,996} Cr_{0,004})_2 O_3 + 0 \text{ bis } 10 \text{ Gew.-\% Fe.}$$

Nach dem unter Beispiel I angegebenen Verfahren wurden je mehrere Parallelproben des obigen Materials mit Eisengehalten von 0 bis 10 % hergestellt. Die Sintertemperaturen bewegten sich zwischen 1340°C und 1460°C. Die Resultate sind in den Figuren 1 bis 4 dargestellt. Es zeigt sich deutlich, dass schon kleine Mengen von Eisen die Eigenschaften des Werkstoffes wesentlich verbessern. So kann z.B. mit einem Eisenzusatz von 1 Gew.-% eine Dichte von über 96 % des theoretischen Wertes erreicht werden bei einer Senkung der Sintertemperatur von 1430°C bei eisenfreiem Material auf 1370°C. Eisen verfeinert ausserdem das Korn bzw. wirkt hemmend auf das Kornwachstum ein. Dies ermöglicht einen vollständigeren Ablauf des Sintervorganges ohne Gefahr der Grobkornbildung, was für die Eigenschaften des Keramikkörpers allgemein von Vorteil ist. Zudem ist die Korngrössenverteilung bei eisenhaltigem Material enger als bei eisenfreiem, was auf erhöhte Homogenität schliessen lässt.

Ausführungsbeispiel III:

Das Endprodukt des Werkstoffes entsprach folgender Formel:

$$(V_{0,996} Cr_{0,004})_2 O_3 + 5 \text{ Gew.-\% Co.}$$

Die gemäss Beispiel I verarbeiteten Komponenten stellten sich wie folgt:

- 7 -

$$V_2O_5 \quad : \quad 50 \text{ g}$$

$$Cr_2O_3 \quad : \quad 0,168 \text{ g}$$

$$Co_3O_4 \quad : \quad 2,966 \text{ g}$$

Im übrigen wurde das unter Beispiel I erläuterte Verfahren angewendet, wobei während 10 h bei einer Temperatur von 1430°C gesintert wurde. Die erzielte Dichte betrug 98,9 % des theoretischen Wertes. Alle weiteren Eigenschaften können aus der Tabelle 2 entnommen werden.

Ausführungsbeispiel IV:

Das Endprodukt entsprach der Formel:

$$(V_{0,996} \, Cr_{0,004})_2O_3 + 5 \text{ Gew.-\% Ni.}$$

Die gemäss Beispiel I verarbeiteten Komponenten wurden wie folgt eingewogen:

$$V_2O_5 \quad : \quad 50 \text{ g}$$

$$Cr_2O_3 \quad : \quad 0,168 \text{ g}$$

$$NiO \quad : \quad 2,771 \text{ g}$$

Die Sintertemperatur betrug 1430°C, die Zeitdauer der Sinterung 10 h. Als Dichte wurden 97,3 % der theoretischen erreicht. Die elektrischen Eigenschaften sind in Tabelle 2 aufgeführt.

Ausführungsbeispiel V:

Es wurde ein der folgenden Formel entsprechendes Endprodukt hergestellt:

- 8 -

$$(V_{0,996} \, Cr_{0,004})_2 O_3 + 5 \text{ Gew.-\% Cu.}$$

Gemäss Beispiel I wurden folgende Komponenten eingewogen und weiterverarbeitet:

$$V_2 O_5 \quad : \quad 50 \text{ g}$$

$$Cr_2 O_3 \quad : \quad 0,168 \text{ g}$$

$$CuO \quad : \quad 2,726 \text{ g}$$

Das gepresste Pulver wurde während 10 h bei einer Temperatur von 1400°C gesintert, wobei eine Dichte von 98,6 % der theoretischen erreicht wurde. Die übrigen Eigenschaften sind aus der Tabelle 2 ersichtlich. Der Kaltwiderstand $\rho_{20°C}$ wird offenbar durch Kupferzusatz besonders stark erniedrigt und betrug im vorliegenden Fall noch 1,15 m$\Omega$ cm.

Ausführungsbeispiel VI:

Das Endprodukt entsprach der Formel:

$$(V_{0,996} \, Cr_{0,004})_2 O_3 + 5 \text{ Gew.-\% Fe} + 10 \text{ Gew.-\% Cu.}$$

Für das im übrigen nach Beispiel I durchgeführte Verfahren standen folgende Komponenten zur Verfügung:

$$V_2 O_5 \quad : \quad 50 \text{ g}$$

$$Cr_2 O_3 \quad : \quad 0,168 \text{ g}$$

$$Fe_2 O_3 \quad : \quad 3,479 \text{ g}$$

$$CuO \quad : \quad 6,094 \text{ g}$$

- 9 -

Die Sintertemperatur betrug 1400°C, die Sinterdauer 10 h. Es wurde eine Dichte von 96,0 % des theoretischen Wertes erreicht. Die Eigenschaften sind der Tabelle 2 zu entnehmen. Bei diesem Beispiel fällt der besonders niedrige Kaltwiderstand von 0,89 m$\Omega$ cm auf.

Ausführungsbeispiel_VII:

Das Endprodukt entsprach der Formel:

$$(V_{0,996} \ Cr_{0,004})_2O_3 + 5 \ Gew.-\% \ Fe + 5 \ Gew.-\% \ Cu$$

Die nach Beispiel I eingewogenen und weiterverarbeiteten Komponenten stellten sich wie folgt:

$$
\begin{array}{lll}
V_2O_5 & : & 50 \ g \\
Cr_2O_3 & : & 0,168 \ g \\
Fe_2O_3 & : & 3,286 \ g \\
Cu \ 0 & : & 2,877 \ g
\end{array}
$$

Das gepresste Pulver wurde während 10 h bei einer Temperatur von 1400°C gesintert, wobei eine Dichte von 96,9 % des theoretischen Wertes erreicht wurde. Weitere Eigenschaften siehe Tabelle 2!

Ausführungsbeispiel_VIII:

Das Endprodukt entsprach der Formel:

$$(V_{0,996} \ Cr_{0,004})_2O_3 + 2,5 \ Gew.-\% \ Fe + 10 \ Gew.-\% \ Cu$$

- 10 -

Die nach Beispiel I eingewogenen und weiterverarbeiteten
Komponenten stellten sich wie folgt:

$$V_2O_5 \quad : \quad 50 \text{ g}$$

$$Cr_2O_3 \quad : \quad 0,168 \text{ g}$$

$$Fe_2O_3 \quad : \quad 1,690 \text{ g}$$

$$Cu \; O \quad : \quad 5,919 \text{ g}$$

Das gepresste Pulver wurde während 10 h bei einer Temperatur
von 1400°C gesintert, wobei eine Dichte von 95,5 % des
theoretischen Wertes erreicht wurde. Weitere Eigenschaften
siehe Tabelle 2!

Ausführungsbeispiel IX:

Das Endprodukt entsprach der Formel:

$$(V_{0,996} Cr_{0,004})_2O_3 + 2,5 \text{ Gew.-\% Fe} + 5 \text{ Gew.-\% Cu}$$

Die nach Beispiel I eingewogenen und weiterverarbeiteten
Komponenten stellten sich wie folgt:

$$V_2O_5 \quad : \quad 50 \text{ g}$$

$$Cr_2O_3 \quad : \quad 0,168 \text{ g}$$

$$Fe_2O_3 \quad : \quad 1,599 \text{ g}$$

$$Cu \; O \quad : \quad 2,799 \text{ g}$$

Das gepresste Pulver wurde während 10 h bei einer Temperatur
von 1400°C gesintert, wobei eine Dichte von 96,6 % des
theoretischen Wertes erreicht wurde. Weitere Eigenschaften

- 11 -

siehe Tabelle 2!

<u>Ausführungsbeispiel X:</u>

Das Endprodukt entsprach der Formel:

$$(V_{0,995} Al_{0,005})_2O_3 + 5 \text{ Gew.-\% Fe}$$

Die nach Beispiel I eingewogenen und weiterverarbeiteten Komponenten stellten sich wie folgt:

$$V_2O_5 \quad : \quad 50 \text{ g}$$
$$Al_2O_3 \quad : \quad 0,141 \text{ g}$$
$$Fe_2O_3 \quad : \quad 3,111 \text{ g}$$

Das gepresste Pulver wurde während 10 h bei einer Temperatur von $1400^{\circ}C$ gesintert, wobei eine Dichte von 95,0 % des theoretischen Wertes erreicht wurde. Weitere Eigenschaften siehe Tabelle 2!

Der höhere Kaltwiderstand ist für gewisse Anwendungen wünschenswert.

<u>Ausführungsbeispiel XI:</u>

Das Endprodukt entsprach der Formel:

$$(V_{0,995} Al_{0,005})_2O_3 + 10 \text{ Gew.-\% Cu}$$

Die nach Beispiel I eingewogenen und weiterverarbeiteten Komponenten stellten sich wie folgt:

- 12 -

$$V_2O_5 \quad : \quad 50 \text{ g}$$

$$Al_2O_3 \quad : \quad 0,141 \text{ g}$$

$$Cu \, O \quad : \quad 5,751 \text{ g}$$

Das gepresste Pulver wurde während 10 h bei einer Temperatur von 1400°C gesintert, wobei eine Dichte von 96,4 % des theoretischen Wertes erreicht wurde. Weitere Eigenschaften siehe Tabelle 2 !

Ausführungsbeispiel XII:

Das Endprodukt entsprach der Formel:

$$(V_{0,995} Sc_{0,005})_2O_3 + 5 \text{ Gew.-\% Fe}$$

Die nach Beispiel I eingewogenen und weiterverarbeiteten Komponenten stellten sich wie folgt:

$$V_2O_5 \quad : \quad 50 \text{ g}$$

$$Sc_2O_3 \quad : \quad 0,191 \text{ g}$$

$$Fe_2O_3 \quad : \quad 3,115 \text{ g}$$

Das gepresste Pulver wurde während 10 h bei einer Temperatur von 1400°C gesintert, wobei eine Dichte von 95,3 % des theoretischen Wertes erreicht wurde. Weitere Eigenschaften siehe Tabelle 2!

Ausführungsbeispiel XIII:

Das Endprodukt entsprach der Formel:

$$(V_{0,995} Sc_{0,005})_2O_3 + 10 \text{ Gew.-\% Cu}$$

- 13 -

Die nach Beispiel I eingewogenen und weiterverarbeiteten
Komponenten stellten sich wie folgt:

$$V_2O_5 \quad : \quad 50 \text{ g}$$

$$Sc_2O_3 \quad : \quad 0{,}191 \text{ g}$$

$$Cu\ O \quad : \quad 5{,}757 \text{ g}$$

Das gepresste Pulver wurde während 10 h bei einer Temperatur
von 1400°C gesintert, wobei eine Dichte von 96,5 % des
theoretischen Wertes erreicht wurde. Weitere Eigenschaften
siehe Tabelle 2!

Tabelle 1

Grundmaterial: $(V_{0,997} Cr_{0,003})_2O_3$

| Fe (Gew.-%) | $\rho$ (m$\Omega$cm) | $\vartheta_c$ (°C) | $\dfrac{\rho_{max}}{\rho_{20°C}}$ |
|---|---|---|---|
| 0 | 1,66 ± 0,33 | 111 ± 12 | 53 ± 13 |
| 2,5 | 1,43 ± 0,21 | 106 ± 7 | 63 ± 6 |

Tabelle 2

| Bei-spiel | Hauptkomponente | Metallzusatz | | | | Sinterbedingungen | |
|---|---|---|---|---|---|---|---|
| | | Fe | Co | Ni | Cu | $\vartheta$ (°C) | Zeit (h) |
| 0 | $(V_{0,996}\,Cr_{0,004})_2O_3$ | – | – | – | – | 1430 | 10 |
| 3 | $(V_{0,996}\,Cr_{0,004})_2O_3$ | – | 5 | – | – | 1430 | 10 |
| 4 | $(V_{0,996}\,Cr_{0,004})_2O_3$ | – | – | 5 | – | 1430 | 10 |
| 5 | $(V_{0,996}\,Cr_{0,004})_2O_3$ | – | – | – | 5 | 1400 | 10 |
| 6 | $(V_{0,996}\,Cr_{0,004})_2O_3$ | 5 | – | – | 10 | 1400 | 10 |
| 7 | $(V_{0,996}\,Cr_{0,004})_2O_3$ | 5 | – | – | 5 | 1400 | 10 |
| 8 | $(V_{0,996}\,Cr_{0,004})_2O_3$ | 2,5 | – | – | 10 | 1400 | 10 |
| 9 | $(V_{0,996}\,Cr_{0,004})_2O_3$ | 2,5 | – | – | 5 | 1400 | 10 |
| 10 | $(V_{0,995}\,Al_{0,005})_2O_3$ | 5 | – | – | – | 1400 | 10 |
| 11 | $(V_{0,995}\,Al_{0,005})_2O_3$ | – | – | – | 10 | 1400 | 10 |
| 12 | $(V_{0,995}\,Sc_{0,005})_2O_3$ | 5 | – | – | – | 1400 | 10 |
| 13 | $(V_{0,995}\,Sc_{0,005})_2O_3$ | – | – | – | 10 | 1400 | 10 |

Tabelle 2 (Fortsetzung)

| Bei-spiel | Dichte ($\% \varrho_{th}$) | Kaltwiderstand $\varrho$ 20°C (m$\Omega$cm) | Schalttemperatur (°C) | $\dfrac{\varrho_{max}}{\varrho_{20°C}}$ |
|---|---|---|---|---|
| 0 | 96,2 | 1,60 | 110 | 34 |
| 3 | 98,9 | 1,30 | 120 | 63 |
| 4 | 97,3 | 1,35 | 113 | 57 |
| 5 | 98,6 | 1,15 | 108 | 57 |
| 6 | 96,0 | 0,89 | 113 | 54 |
| 7 | 96,9 | 1,55 | 117 | 48 |
| 8 | 95,5 | 1,00 | 107 | 57 |
| 9 | 96,6 | 1,15 | 110 | 76 |
| 10 | 95,0 | 2,40 | 81 | 60 |
| 11 | 96,4 | 1,35 | 81 | 64 |
| 12 | 95,3 | 9,00 | 88 | 50 |
| 13 | 96,5 | 4,50 | 95 | 55 |

Die Erfindung ist nicht auf die vorstehenden Beispiele beschränkt. Ganz allgemein kann das Kaltleitermaterial neben dem $V_2O_3$ die üblichen Dotierungselemente Chrom, Aluminium und Scandium allein oder in beliebiger Mischung untereinander bis zu einem Gesamtgehalt von 2 Gew.-% enthalten, wobei die Grenze für Chrom allein bei 1,5 Gew.-% liegt. Bevorzugte Chromgehalte liegen zwischen 0,1 und 1,5 Gew.-%. Die Zusätze bestehen aus mindestens einem der Elemente Eisen, Kupfer, Nickel, Kobalt, welche vorwiegend oder ausschliesslich in elementarer Form vorliegen. Eisen oder Kupfer können in Gehalten von 0,1 bis 15 Gew.-% vorhanden sein, wobei die bevorzugte Zusammensetzung für Eisen bei 2,5 Gew.-% liegt. Sind Eisen und Kupfer gleichzeitig vorhanden, so bewegt sich ihr Gehalt für jedes Element in den Grenzen von 0,1 bis 10 Gew.-%. Das gleiche gilt für den Fall, dass Eisen und/ oder Kupfer entweder teilweise oder aber vollständig durch mindestens eines der Elemente Nickel, Kobalt ersetzt sind.

Bei der Durchführung des Verfahrens wird grundsätzlich immer von Vanadiumpentoxyd sowie von den dreiwertigen Oxyden des Chroms, Aluminiums, Scandiums ausgegangen, welche wahlweise mit den Oxyden mindestens eines der Elemente Eisen, Kupfer, Nickel, Kobalt der Partikelgrösse 0,1 bis 2 $\mu$ gemischt werden. Durch die Glühprozesse bei 600°C/3 h und 990°C/5 h werden die Oxyde der Zusatzmetalle weitgehend zu elementarer Form reduziert, während das Vanadiumpentoxyd nur zu Vanadiumsesquioxyd reduziert wird und die Oxyde des Chroms, Aluminiums und Scandiums unverändert bleiben. Der Sinterprozess kann bei Temperaturen im Bereich von 1340°C bis 1460°C während 3 bis 20 h erfolgen. Sintertemperatur und -Dauer sind von der Grösse des Körpers, seiner Form und von der Zusammensetzung abhängig. Eisen wird normalerweise als $Fe_2O_3$ beigegeben, doch

kann der Zusatz selbstverständlich auch in Form eines niedrigeren Oxyds oder als Metallpulver erfolgen. Dasselbe gilt für die anderen Zusätze (Cu, Ni, Co). Wie aus den Tabellen hervorgeht, können die Zusammensetzungen und Sinterbedingungen innerhalb gewisser Grenzen schwanken. Bevorzugt ist eine Pulvermischung, die 0,33 Gew.-% Chromoxyd, 2,9 Gew.-% Eisenoxyd, Rest Vanadiumpentoxyd, bei einer Partikelgrösse von 0,1 $\mu$, enthält und bei 1370°C gesintert wird.

- 19 -

P a t e n t a n s p r ü c h e

1. Gesintertes Kaltleitermaterial auf der Basis von chromhaltigem $V_2O_3$, dadurch gekennzeichnet, dass es ausser einem Gehalt von max. 1,5 Gew.-% Chrom noch weitere Zusätze aus mindestens einem der Elemente Eisen, Kupfer, Nickel oder Kobalt enthält.

2. Kaltleitermaterial nach Anspruch 1, dadurch gekennzeichnet, dass es 0,1 bis 1,5 Gew.-% Chrom und 0,1 bis 15 Gew.-% Eisen, letzteres vorwiegend in elementarer Form enthält.

3. Kaltleitermaterial nach Anspruch 2, dadurch gekennzeichnet, dass sein Eisengehalt 2,5 % beträgt.

4. Kaltleitermaterial nach Anspruch 1, dadurch gekennzeichnet, dass es 0,1 bis 1,5 Gew.-% Chrom und 0,1 bis 15 Gew.-% Kupfer enthält.

5. Kaltleitermaterial nach Anspruch 1, dadurch gekennzeichnet, dass es 0,1 bis 1,5 Gew.-% Chrom, 0,1 bis 10 Gew.-% Eisen und 0,1 bis 10 Gew.-% Kupfer enthält.

6. Kaltleitermaterial nach Anspruch 5, dadurch gekennzeichnet, dass das Eisen und/oder das Kupfer teilweise oder vollständig durch Nickel und/oder Kobalt ersetzt sind.

7. Kaltleitermaterial nach einem der vorangegangenen Ansprüche, dadurch gekennzeichnet, dass das Chrom teilweise oder vollständig durch Aluminium und/oder Scandium ersetzt ist und dass im Falle des vollständigen Chromersatzes die Summe des Aluminium- und Scandiumgehaltes bis max. 2 Gew.-% betragen kann.

8. Verfahren zur Herstellung von gesintertem Kaltleitermaterial nach Anspruch 1, dadurch gekennzeichnet, dass zunächst eine Pulvermischung aus $V_2O_5$, $Cr_2O_3$ und einem Oxyd mindestens eines der Elemente Fe, Cu, Ni oder Co mit der Partikelgrösse 0,1 bis 2 $\mu$ hergestellt, während 5 h unter absolutem Alkohol im Achatbecher in einer Planetenmühle gemahlen, zentrifugiert und unter Vakuum getrocknet sowie anschliessend im Wasserstoffstrom während 3 h bei 600°C und während 5 h bei 990°C geglüht wird, und dass schliesslich die Pulvermischung unter einem Druck von 620 bar zu einer Tablette gepresst und der Pressling in Wasserstoffatmosphäre mit einem Taupunkt von 0°C während 3 bis 20 h im Temperaturbereich von 1340 bis 1460°C gesintert und anschliessend im Ofen abgekühlt wird.

9. Verfahren nach Anspruch 8, dadurch gekennzeichnet, dass zur Pulvermischung $V_2O_5$, $Cr_2O_3$ und $Fe_2O_3$ verwendet werden.

10. Verfahren nach Anspruch 9, dadurch gekennzeichnet, dass zur Pulvermischung 0,33 Gew.-% $Cr_2O_3$ und 2,9 Gew.-%

$Fe_2O_3$, Rest $V_2O_5$ mit einer Partikelgrösse von 0,1 $\mu$ verwendet werden und dass bei einer Temperatur von 1370° gesintert wird.

11. Verfahren nach Anspruch 9, dadurch gekennzeichnet, dass zur Pulvermischung 0,32 Gew.-% $Cr_2O_3$ und 4,9 Gew.-% CuO, Rest $V_2O_5$ mit einer Partikelgrösse von 0,1 $\mu$ verwendet werden.

12. Verfahren nach einem der Ansprüche 8 bis 11, dadurch gekennzeichnet, dass das $Cr_2O_3$ teilweise oder vollständig durch $Al_2O_3$ und/oder $Sc_2O_3$ ersetzt wird, dergestalt, dass auf einen ersetzten Gewichtsanteil $Cr_2O_3$ 0,67 Gewichtsteile $Al_2O_3$ oder 0,73 Gewichtsteile $Sc_2O_3$ kommen.

0037859

1/2

FIG.1

FIG.2

36/80 2/1

FIG.3

FIG.4

0037859

$2/2$

36/80 2/2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | SOLID STATE COMMUNICATIONS, Band 8, Nr. 18, 15. September 1970, Seiten 1469-1472 <br> M. RUBINSTEIN: "Investigation of the metal-insulator transition in Cr- and Al-doped $V_2O_3$ by nuclear magnetic resonance" <br><br> * Seite 1470, Abbildung 3 * <br><br> ---- | 1 |

**KLASSIFIKATION DER ANMELDUNG (Int. Cl.³)**

H 01 B 1/08
H 01 C 7/02
C 04 B 35/00

**RECHERCHIERTE SACHGEBIETE (Int. Cl.³)**

H 01 B 1/08
H 01 C 7/02
C 04 B 35/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-01-1981 | VAN DEN BULCKE |

EPA form 1503.1   06.78